# EUROPÄISCHE PATENTANMELDUNG

(11) **EP 4 413 840 A1**
(43) Veröffentlichungstag der Anmeldung: **14.08.2024**
(21) Anmeldenummer: 24155294.2
(22) Anmeldetag: 01.02.2024
(51) Int. Cl.: A01C 5/06, A01C 7/20

(54) **LANDWIRTSCHAFTLICHES ANBAUGERÄT UND SÄSCHARANORDNUNG**

(30) Priorität: 08.02.2023 DE 102023103007
(71) Anmelder: Horsch Maschinen GmbH, 92421 Schwandorf (DE)
(72) Erfinder: Horsch, Philipp, 92421 Schwandorf (DE)
(74) Vertreter: v. Bezold & Partner Patentanwälte - PartG mbB

(57) **Zusammenfassung**

Die Erfindung betrifft ein landwirtschaftliches Anbaugerät (10), insbesondere eine landwirtschaftliche Sämaschine, mit einem sich quer zur Fahrtrichtung (FR) erstreckenden Trägerrahmen (16) mit einer Zweipunkt-, Dreipunkt- oder Vierpunktanhängung (18), die zur Koppelung des Trägerrahmen (16) mit einem Zweipunkt-, Dreipunkt- oder Vierpunkt-Kraftheber eines landwirtschaftlichen Zug- oder Trägerfahrzeug eingerichtet ist. Die Erfindung sieht vor, dass am Trägerrahmen (16) eine Vielzahl von Einscheibenscharen (28) schwenkbar gelagert sind, wobei die Einscheibenschare (28) jeweils eine Schneidscheibe (30), die in einem spitzen Winkel (α) gegenüber der Fahrtrichtung (FR) nach links oder nach rechts orientiert ist, aufweisen, wobei die Anzahl der nach links orientierten Schneidscheiben (30) gegenüber einer Anzahl der nach rechts orientierten Schneidscheiben (30) gleich ist oder um maximal 2 oder um maximal 5 unterschiedlich zueinander ist.

Die Erfindung betrifft zudem eine Säscharanordnung (14).

## Beschreibung

Die Erfindung betrifft ein landwirtschaftliches Anbaugerät, insbesondere eine landwirtschaftliche Sämaschine. Die Erfindung betrifft zudem eine Säscharanordnung.

Im Bereich der landwirtschaftlichen Arbeitsgeräte wird zwischen gezogenen Arbeitsgeräten und Anbaugeräten unterschieden. Gezogene Arbeitsgeräte verfügen in der Regel über ein eigenes Fahrwerk und werden mittels eines landwirtschaftlichen Zugfahrzeug gezogen, wobei die gezogenen Arbeitsgeräte zudem einen mehrreihigen Aufbau aufweisen, d.h. einen Aufbau mit mehreren hintereinander angeordneten, sich quer zur Fahrtrichtung erstreckenden Trägerrahmen aufweisen, wodurch derartige Arbeitsgeräte eine lange Bauweise in Fahrtrichtung haben.

Demgegenüber werden landwirtschaftliche Anbaugeräte in der Regel mittels einer Dreipunktanhängung an einen Dreipunkt-Kraftheber eines landwirtschaftlichen Zug- oder Trägerfahrzeug angebaut, wobei die Anbaugeräte zudem kein eigenes Fahrwerk aufweisen. Derartige Anbaugeräte weisen zudem einen in Fahrtrichtung wesentlich kürzeren Aufbau auf als gezogene Arbeitsgeräte.

Bei der Pflege von Reihenkulturen werden zudem unterschiedlichste landwirtschaftliche Arbeitsgeräte wie bspw. Bodenbearbeitungsmaschinen, Sämaschinen, Düngerstreuer, Feldspritzen, Hacken, Hackstriegel und/oder dergl. eingesetzt. Wobei diese Arbeitsgeräte zudem zunehmend auch als autonome Trägerfahrzeuge ausgeführt sind oder als mittels eines autonomen Zugfahrzeuges gezogene Arbeitsgeräte ausgeführt sind. Die Bewegung der Arbeitsgeräte erfolgt zumeist anhand von GPS-Daten entlang von entsprechenden Fahrtrouten.

Um die Arbeitsgeräte autonom, oder um verschiedenste Arbeitsgeräte zur Pflege von Reihenkulturen einsetzen zu können, ist es erforderlich, dass insbesondere die Aussaat der Reihenkultur möglichst spurgetreu erfolgt, d.h. möglichst derartig erfolgt, dass Abstände bei Anschlussfahrten gleichbleibend sind und das jeweilige Arbeitsgeräte dem Zug- oder Trägerfahrzeug möglichst spurgetreu folgt.

Insbesondere bei Anbaugeräten war eine spurgetreue Aussaat von Reihenkulturen bislang nicht immer möglich, insbesondere bei sich häufig wechselnden Bodenbedingungen. Um dem entgegenzuwirken sind aus dem Stand der Technik verschiedene Ansätze bekannt. So sieht die DE 10 2020 113 349 A1 vor, dass Anbaugerät mittels einer Kupplungsvorrichtung mit einem Trägerrahmen derartig zu koppeln, dass eine Lage des Anbaugeräts quer zur Fahrtrichtung verschoben werden kann. Einen weiteren Ansatz beschreibt die DE 10 2015 009 889 A1, hierbei ist vorgesehen, dass ein Anbaugerät direkt an den Dreipunkt-Kraftheber eines Zug- oder Trägerfahrzeug angebaut ist, eine Lage der Unterlenker des Dreipunkt-Kraftheber jedoch mittels einer Schwenkvorrichtung derartig veränderbar ist, dass wiederum die Lage des Anbaugerätes quer zur Fahrtrichtung verschoben werden kann.

Bisherige Lösungen erfordern jedoch immer entsprechende Kupplungs- bzw. Schwenkvorrichtungen sowie Steuervorrichtungen zur Ansteuerung der Kupplungs- bzw. Schwenkvorrichtungen. Wobei die Steuervorrichtungen ein Positionsbestimmungssystem (z.B. GPS-System) erfordern, um somit die Kupplungs- bzw. Schwenkvorrichtungen exakt zu steuern. Dies macht jedoch den an sich einfachen Aufbau und die einfache Handhabung von Anbaugeräten zunichte. Auch können entsprechende Steuervorrichtungen und Positionsbestimmungssysteme die Kosten derartiger Anbaugeräte um ein Vielfaches erhöhen.

Aufgabe der Erfindung ist es somit, die beschriebenen Nachteile des Stands der Technik zu beseitigen. Insbesondere soll ein Anbaugerät mit einem einfachen Anbau an ein Zug- oder Trägerfahrzeug geschaffen werden, mit dem eine Spur möglichst exakt eingehalten werden kann.

Diese Aufgaben werden gelöst durch ein landwirtschaftliches Anbaugerät mit den Merkmalen des unabhängigen Anspruch 1 sowie durch eine Säscharanordnung mit den Merkmalen des Anspruchs 13. Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird ein landwirtschaftliches Anbaugerät, insbesondere eine landwirtschaftliche Sämaschine bereitgestellt. Das Anbaugerät dient insbesondere zur Bodenbearbeitung und/oder zur Aussaat von landwirtschaftlichen Verteilgütern wie bspw. Saatgut, Dünger oder dergl. in granularer und/oder flüssiger Form. Insbesondere bildet das Anbaugerät eine Sämschaschine.

Das Anbaugerät umfasst einen sich quer zur Fahrtrichtung (z.B. Vorwärtsrichtung entlang welche das Anbaugerät während eines Arbeitsprozess bewegt wird) erstreckenden Trägerrahmen, mit einer Zweipunktanhängung, Dreipunktanhängung und/oder Vierpunktanhängung, die zur Koppelung des Trägerrahmen mit einem Zweipunkt-Kraftheber, Dreipunkt-Kraftheber und/oder Vierpunkt-Kraftheber eines landwirtschaftlichen Zug- oder Trägerfahrzeug (z.B. landwirtschaftlicher Traktor, autonomes Fahrzeug und/oder dergl.) eingerichtet ist.

Die Zweipunktanhängung und/oder der Zweipunkt-Kraftheber kann beispielsweise durch eine Unterlenkeranhängung gebildet sein.

Die Vierpunktanhängung und/oder der Vierpunktkraftheber kann beispielsweise durch ein Parallelogramm (z. B. Parallelogrammgestänge) gebildet sein.

Die Dreipunktanhängung umfasst vorzugsweise zumindest eine obere Koppelstelle, welche zur Koppelung mit einem Oberlenker eingerichtet ist und zwei untere Koppelstellen, welche zur Koppelung mit zwei Unterlenker des Dreipunkt-Kraftheber eingerichtet sind.

Die Zweipunktanhängung umfasst vorzugsweise zumindest zwei (insbesondere untere) Koppelstellen, welche zur Koppelung mit zumindest zwei (insbesondere unteren) Lenkern des Zweipunkt-Kraftheber eingerichtet sind.

Die Vierpunktanhängung umfasst vorzugsweise zumindest zwei obere Koppelstellen, welche zur Koppelung mit einem Oberlenker eingerichtet sind und zumindest zwei untere Koppelstellen, welche zur Koppelung mit zwei Unterlenkern des Vierpunkt-Kraftheber eingerichtet sind.

Am Trägerrahmen ist eine Vielzahl von Einscheibenscharen schwenkbar gelagert, wobei die Einscheibenschare jeweils eine Schneidscheibe, die in einem spitzen Winkel gegenüber der Fahrtrichtung nach links oder nach rechts orientiert ist, aufweisen, wobei die Anzahl der nach links orientierten Schneidscheiben gegenüber einer Anzahl der nach rechts orientierten Schneidscheiben gleich ist oder um maximal 2 oder um maximal 5 unterschiedlich zueinander ist.

Infolge der Erfindungsgemäßen Maßnahmen wird durch die gleiche Anzahl an links oder rechts orientierten Schneidscheiben die Gefahr des Abdriften des Anbaugerät gegenüber dem Zug- und/oder Trägerfahrzeug verringert und insbesondere der spurgetreue Nachlauf sichergestellt, da somit jeweils die durch die Schneidscheiben hervorgerufenen, nach links und nach rechts wirkenden Seitenkräfte des Anbaugerät im Wesentlichen gleich groß sind und sich somit entsprechend aufheben.

Insbesondere sieht die Erfindung eine gleich große Anzahl von gegensinnig orientierten Schneidscheiben vor.

Es sei darauf hingewiesen, dass von der Definition Einscheibenschar jegliche Säschare und Arbeitswerkzeuge umfasst sind, welche durch eine Anordnung der Schneidwerkzeuge, d.h. der Schneidscheiben, eine quer zur Fahrtrichtung orientierte Seitenkraft erzeugen. Ausgenommen können somit insbesondere Doppelscheibenschare mit jeweils in einem gleichen Winkel gegenüberliegend angeordneten zwei Schneidscheiben sein.

Die Lagerung der Einscheibenschare erfolgt insbesondere derartig schwenkbar, dass eine Kraft (z.B. sog. Schardruck) mit welcher die Einscheibenschare entlang der Bodenfläche geführt werden einstellbar ist, die Einscheibenschare jedoch auch, bspw. beim Auftreffen auf Hindernisse, nach oben Ausweichen können. Insbesondere erfolgt die schwenkbare Lagerung mittels Elastomerlager.

Die Lagerung der Einscheibenschare kann mittels einer Schwinge erfolgen und/oder mittels Parallelogramms erfolgen. Insbesondere kann der Scharrahmen des Einscheibenschar eine Schwinge und/oder ein Parallelogramm bilden. Wobei wiederum die Schwinge und/oder das Parallelogramm mittels Elastomerlager am Trägerrahmen gelagert sein können.

Bevorzugt können die Einscheibenschare die einzigen, am Anbaugerät vorhandenen, Säschare sein. Insbesondere kann vorgesehen sein, dass die Einscheibenschare die einzigen, am Anbaugerät vorhandenen und eine Schneidscheibe aufweisenden Werkzeuge sein.

Gemäß einer bevorzugten Ausführungsvariante kann vorgesehen sein, dass die Schneidscheiben der Einscheibenschare die einzigen am Anbaugerät vorhandenen Werkzeuge sind, welche eingerichtet sind eine Saatfurche zu erzeugen und/oder welche eingerichtet sind in definierter Arbeitstiefe entlang der Bodenfläche bewegt zu werden.

Die Schneidscheibe bildet insbesondere den ersten Schenkel des spitzen Winkel, zudem bildet eine den ersten Schenkel schneidende, parallel zur Fahrtrichtung verlaufende Achse (z.B. Mittelachse) den zweiten Schenkel. Somit ergibt sich zwischen dem ersten Schenkel und dem zweiten Schenkel der spitze Winkel. Wobei wiederum der spitze Winkel gegenüber der Fahrtrichtung nach links oder nach rechts orientiert ist.

Der spitze Winkel beträgt insbesondere zwischen 3° und 15° und/oder zwischen 4° und 10°. Insbesondere beträgt der spitze Winkel im Wesentlichen 6°.

In einer bevorzugten Ausführungsvariante kann vorgesehen sein, dass der spitze Winkel der links orientierten Schneidscheiben und der rechts orientierten Schneidscheiben in Fahrtrichtung sich öffnend ausgeführt ist oder in Fahrtrichtung sich schließend ausgeführt ist. Insbesondere kann vorgesehen sein, dass der spitze Winkel aller Schneidscheiben öffnend oder schließend ausgeführt ist, d.h. dass der spitze Winkel aller Schneidscheiben gleich ausgeführt ist.

Bevorzugt kann vorgesehen sein, dass die spitzen Winkel der nach links orientierten Schneidscheiben gleich sind zu den spitzen Winkel der nach rechts orientierten Schneidscheiben. Insbesondere können alle spitzen Winkel der nach links orientierten Schneidscheiben gleich groß sein und/oder unterschiedlich groß sein ebenso können alle spitzen Winkel der nach links orientierten Schneidscheiben gleich groß sein und/oder unterschiedlich groß sein. Auch können Gruppen von links oder rechts orientierten Schneidscheiben mit gleichen spitzen Winkel vorgesehen sein. Wobei es insbesondere möglich ist, dass die Summe der spitzen Winkel, die nach links orientiert sind im Wesentlichen identisch ist oder um maximal 20% oder um maximal 10% unterschiedlich ist zur Summe der spitzen Winkel, die nach rechts orientiert sind.

Das Einscheibenschar umfasst insbesondere einen Scharrahmen, an welchem die Schneidscheibe drehbar gelagert ist. Die Schneidscheibe dient insbesondere zur Erzeugung einer Saatfurche, in welche das Verteilgut abgelegt werden kann. Um die Saatfurche noch präziser zu öffnen, kann neben der Schneidscheibe eine Scharkufe vorgesehen sein. Darüber hinaus kann der Schneidscheibe eine Druckrolle nachgelagert sein. Zudem kann neben der Schneidscheibe eine Tiefenführungsrolle vorgesehen sein. Insbesondere kann die Druckrolle wiederum in einem spitzen Winkel gegenüber der Fahrtrichtung FR orientiert sein, wobei es vorzugsweise möglich ist, dass der spitze Winkel der Druckrolle entgegengesetzt zum spitzen Winkel der Schneidscheibe orientiert ist. Der spitze Winkel der Druckrolle und der Schneidscheibe können vorzugsweise gleich groß sein, jedoch gegensinnig zueinander orientiert sein.

Gemäß einer bevorzugten Ausführungsvariante kann vorgesehen sein, dass die Einscheibenschare (d.h. unabhängig ob links oder rechts orientiert) in einer Querreihe (und somit bspw. Scharreihe) schwenkbar am Trägerrahmen gelagert sind. Insbesondere kann vorgesehen sein, dass die Einscheibenschare ausschließlich in einer Querreihe schwenkbar am Trägerrahmen gelagert sind. Alternativ oder ergänzend kann insbesondere vorgesehen sein, dass die Einscheibenschare derartig schwenkbar am Trägerrahmen gelagert sind, dass die Aufstandspunkte der Schneidscheiben auf einer gemeinsamen, quer zur Fahrtrichtung orientierten Achse liegen. Wobei insbesondere vorgesehen sein kann, dass die Aufstandspunkte der Schneidscheiben jeweils einen im wesentlichen gleichen Abstand in Fahrtrichtung zum Träger aufweisen. Insbesondere können jeweils Einscheibenschare mit einem identischen Grundaufbau zum Einsatz kommen.

Alternativ oder ergänzend kann vorgesehen sein, dass die Aufstandspunkte der Schneidscheiben auf maximal 2 oder maximal 3, quer zur Fahrtrichtung orientierten Achsen liegen. Insbesondere kann vorgesehen sein, dass die Einscheibenschare jeweils einen Scharrahmen aufweisen, an welchem die Schneidscheiben drehbar gelagert sind, wobei insbesondere die Scharrahmen unterschiedliche Längen aufweisen können, wodurch sich entsprechend unterschiedliche Abstände der Aufstandspunkte der Schneidscheibe in Fahrtrichtung zum Träger ergeben, jedoch dennoch eine Anordnung der Einscheibenschare in einer Querreihe erfolgt.

Insbesondere ist es möglich, dass die Achse der Aufstandspunkte in Fahrtrichtung hinter dem Trägerrahmen liegt. Wobei der Abstand in Fahrtrichtung mindestens 0,25 Meter oder mindestens 0,5 Meter beträgt.

Eine bevorzugte Ausführungsvariante der Erfindung kann vorsehen, dass der Trägerrahmen und die Einscheibenschare derartig zueinander angeordnet und/oder derartig ausgebildet sind, dass die Länge des Trägerrahmen und der Einscheibenschare in Fahrtrichtung mindestens 1 Meter beträgt und maximal 3 Meter beträgt oder maximal 2,5 Meter beträgt oder maximal 2 Meter beträgt.

Bevorzugt sind die Einscheibenschare derartig schwenkbar am Trägerrahmen angeordnet und/oder ausgebildet, dass die quer zur Fahrtrichtung nebeneinander liegenden Aufstandspunkte von links orientierten Schneidscheiben und von rechts orientierten Schneidscheiben jeweils einen im wesentlichen gleichen Abstand zueinander aufweisen. Wobei der Abstand maximal 0,4 Meter oder maximal 0,25 Meter oder maximal 0,2 Meter beträgt. Insbesondere können die sich durch die Schneidscheiben erzeugten Saatreihen somit unabhängig von der Orientierung der Schneidscheiben einen im wesentlichen gleichen Abstand zueinander aufweisen.

Insbesondere ist es möglich, dass die Einscheibenschare quer zur Fahrtrichtung eine maximale Erstreckung aufweisen, die kleiner ist als ein Abstand von zwei benachbarten Aufstandspunkten (z.B. Reihenabständen) der Schneidscheiben. Insbesondere kann die maximale Erstreckung somit kleiner oder gleich sein zu 25cm oder kleiner oder gleich sein zu 16,7cm oder kleiner oder gleich sein zu 15cm.

Ein einfacher Aufbau des Anbaugerät kann zweckmäßig durch einen Aufbau erreicht werden, bei welchem an einer Hälfte, insbesondere einem Ausleger, des Trägerrahmen ausschließlich Einscheibenschare mit nach links orientierten Schneidscheiben oder mit nach rechts orientierten Schneidscheiben schwenkbar gelagert sind. Wobei insbesondere zudem vorgesehen sein kann, dass der jeweiligen gegenüberliegenden Hälfte (z.B. dem gegenüberliegenden Ausleger) des Trägerrahmen Einscheibenschare mit entgegengesetzt, d.h. mit gegensinnig orientierten Schneidscheiben zugeordnet sind.

Eine optimales Kräftegleichgewicht des Anbaugerät kann gemäß einer bevorzugten Weiterbildung dadurch erreicht werden, dass am Trägerrahmen Einscheibenschare mit einer nach links orientierten Schneidscheibe und Einscheibenschare mit einer nach rechts orientierten Schneidscheibe im Wesentlichen symmetrisch zu einer in Fahrtrichtung verlaufenden Mittelachse des Anbaugerät schwenkbar gelagert sind. Insbesondere kann der symmetrische Aufbau dadurch erreicht werden, indem die Anzahl der nach links orientierten Schneidscheiben gegenüber einer Anzahl der nach rechts orientierten Schneidscheiben gleich ist oder um maximal 2 oder um maximal 5 unterschiedlich zueinander ist.

In einer Weiterbildung der Erfindung kann vorgesehen sein, dass am Trägerrahmen (z.B. an den Ausleger) wechselweise Einscheibenschare mit einer nach links orientierten Schneidscheibe und Einscheibenschare mit einer nach rechts orientierten Schneidscheibe gelagert sind. D.h. dass quer zur Fahrtrichtung jeweils einer links orientierten Schneidscheibe eine rechts orientierte Schneidscheibe folgt.

Alternativ oder ergänzend kann vorgesehen sein, dass am Trägerrahmen (z.B. an dem Ausleger) jeweils Gruppen von wenigstens zwei Einscheibenscharen mit einer nach links orientierten Schneidscheibe abwechselnd mit einer Gruppe von wenigstens zwei Einscheibenscharen mit einer nach rechts orientierten Schneidscheibe schwenkbar gelagert sind, wobei die sich abwechselnden Gruppen vorzugsweise jeweils gleich groß sind. Insbesondere können die sich abwechselnden Gruppen von Einscheibenscharen auch wiederum unterschiedlich sein, so dass bspw. einer Gruppe von zwei Einscheibenscharen mit nach links und nach rechts orientierten Schneidscheiben eine Gruppe mit bspw. drei oder vier Einscheibenscharen mit nach links und nach rechts orientierten Schneidscheiben folgt. Wobei unabhängig von der Ausführung der Gruppen die Anzahl der nach links orientierten Schneidscheiben gegenüber der Anzahl der nach rechts orientierten Schneidscheiben gleich ist.

Erfindungsgemäß ist insbesondere vorgesehen, dass die Einscheibenschare derartig schwenkbar am Trägerrahmen gelagert sind, dass die Aufstandspunkte der Einscheibenschare unabhängig von deren Orientierung eine im wesentlichen gleiche Höhenlage zueinander aufweisen, d.h. dass die Aufstandspunkte der Schneidscheiben eine im Wesentlichen gleiche Arbeitstiefe zueinander aufweisen. Insbesondere ist es möglich, dass die Höhenlage von zumindest drei oder mehr (z.B. mit links und/oder rechts orientierten Schneidscheiben) Einscheibenschare gemeinsam verstellbar ist, vorzugsweise mittels eines Stellantrieb gemeinsam verstellbar ist. Bevorzugt sind jeweils zumindest zwei oder mehr Einscheibenschare an einem Rahmenrohr des Trägerrahmen montiert, wobei zur Einstellung einer Höhenlage das Rahmenrohr drehbar und/oder höhenverstellbar mit dem Trägerrahmen verbunden ist und insbesondere ein Stellantrieb zur Rotation und/oder Höhenverstellung des Rahmenrohr vorgesehen ist.

Es kann vorgesehen sein, dass die Kraft (z.B. der Schardruck) mittels welcher die Einscheibenschare entlang der Bodenfläche geführt werden veränderbar ist. Wobei es insbesondere möglich ist, dass die Summe der Kräfte der nach links orientierten Schneidscheiben im Wesentlichen gleich ist zur Summe der Kräfte der nach rechts orientierten Schneidscheiben. Alternativ oder ergänzend kann auch vorgesehen sein, dass die Summe der Kräfte jeweils derartig zueinander veränderbar ist, dass das Anbaugerät anhand der Differenz der Kräfte quer zur Fahrtrichtung bewegbar, d.h. lenkbar ist, so dass das Anbaugerät möglichst exakt entlang einer gewünschten Fahrtroute bewegt wird und insbesondere möglichst mittig in Bezug auf das Zug- oder Trägerfahrzeug entlang einer Bodenfläche bewegt wird.

Eine bevorzugte Ausführungsvariante des erfindungsgemäßen Anbaugerät kann vorsehen, dass der Trägerrahmen durch ein Mittelteil und zumindest zwei seitliche Ausleger gebildet ist, wobei die seitlichen Ausleger um in Fahrtrichtung orientierte Schwenkachsen, schwenkbar gegenüber dem Mittelteil gelagert sind und wobei die Zweipunkt-, Dreipunkt- oder Vierpunktanhängung insbesondere dem Mittelteil zugeordnet ist. Insbesondere ist es gemäß einer alternativen oder ergänzenden Ausführungsvariante möglich, dass der Trägerrahmen durch einen Mittelteil und zwei seitliche Ausleger gebildet ist, wobei an einem der Ausleger ausschließlich Einscheibenschare mit nach links orientierten Schneidscheiben schwenkbar gelagert sind und wobei an einem der Ausleger ausschließlich Einscheibenschare mit nach rechts orientierten Schneidscheiben schwenkbar gelagert sind. Wobei es insbesondere möglich ist, dass jedem Ausleger ein Rahmenrohr zur gemeinsamen Montage von mehreren Einscheibenscharen zugeordnet ist.

Es ist möglich, dass die seitlichen Ausleger durch einen, zwei oder mehr Teilabschnitte gebildet sind. Wobei wiederum den Teilabschnitten jeweils ausschließlich nach links orientierte Schneidscheiben oder nach rechts orientierte Schneidscheiben zugeordnet sein können. Bspw. können auch bei einem aus zwei Teilabschnitten zusammengesetzten Auslegern, einem Teilabschnitt ausschließlich nach links orientierte Schneidscheiben zugeordnet sein und einem Teilabschnitt ausschließlich nach rechts orientierte Schneidscheiben zugeordnet sein.

Um dauerhaft eine gewünschte Arbeitstiefe der Schneidscheiben während eines Arbeitsprozesses zu gewährleisten, kann gemäß einer Weiterbildung der Erfindung eine Gewichtsverlagerung vom Zug- oder Trägerfahrzeug auf das Anbaugerät vorgesehen sein. Insbesondere kann die Gewichtsverlagerung dadurch erreicht werden, dass der Zweipunkt-, Dreipunkt- oder Vierpunktanhängung eine Kraftübertragungseinrichtung, umfassend eine Koppelstange und eine Stelleinrichtung, zugeordnet ist, wobei die Koppelstange eingerichtet ist, eine Verbindung mit einem rückwärtigen Endbereich (z.B. rückwärtigen oberen oder unteren Endbereich), zumindest eines Lenkers (insbesondere Unterlenkers) des Zweipunkt-, Dreipunkt- oder Vierpunkt-Kraftheber herzustellen und wobei die Stelleinrichtung eingerichtet ist, eine Kraft auf die Koppelstange zu übertragen. Die Stelleinrichtung kann bspw. durch einen, insbesondere eine veränderbare Kraft erzeugenden, Zylinder (z.B. Hydraulikzylinder) gebildet sein. Die Stelleinrichtung kann entsprechend mit dem Trägerrahmen, insbesondere mit dem Mittelteil des Trägerrahmen, zum einen und zum anderen mit der Koppelstange verbunden sein.

Insbesondere kann vorgesehen sein, dass die Kraft (z.B. der Schardruck) mittels welcher die Einscheibenschare entlang der Bodenfläche geführt werden veränderbar ist. Wobei es insbesondere möglich ist, dass die Kraft in Abhängigkeit des mittels der Kraftübertragungseinrichtung vom Zug- oder Trägerfahrzeug auf das Anbaugerät übertragenen Gewichts veränderbar ist, so dass bspw. je höher der Anteil des übertragenen Gewichts, desto größer die maximale Kraft, d.h. der maximale Schardruck. Wobei zudem vorgesehen sein kann, dass die Stelleinrichtung der Kraftübertragungseinrichtung und der Stellantrieb zur Verstellung der Einscheibenschare mittels eines elektrischen und/oder hydraulischen, insbesondere eines elektrohydraulischen, Steuer- und/oder Regelkreis entsprechend gekoppelt sind.

Eine exakte Tiefenführung der Einscheibenschare entlang einer Bodenfläche kann gemäß einer Weiterbildung der Erfindung dadurch erreicht werden, dass am Trägerrahmen, insbesondere zumindest an linken und rechten Randbereichen des Trägerrahmen und insbesondere den Einscheibenscharen in Fahrtrichtung vorgelagert, Abstützeinrichtungen vorgesehen sind, wobei die Abstützeinrichtungen und/oder die Einscheibenschare höhenverstellbar gegenüber dem Trägerrahmen am Trägerrahmen gelagert sind. Die Abstützeinrichtungen sind insbesondere durch Stützräder gebildet und vorzugsweise als sog. Frontstützräder ausgeführt. Die Anzahl der Abstützeinrichtungen kann in Abhängigkeit der Arbeitsbreite, d.h. der Längserstreckung des Trägerrahmen variieren. Insbesondere kann die Anzahl der Abstützeinrichtungen derartig gewählt sein, dass ein Abstand zwischen der Zweipunkt-, Dreipunkt- oder Vierpunktanhängung und der jeweiligen Abstützeinrichtung quer zur Fahrtrichtung maximal 3 Meter beträgt. Es ist auch möglich, dass die Anzahl der Abstützeinrichtungen in Abhängigkeit der Ausleger variiert, so dass bspw. bei der Verwendung von zwei seitlichen Auslegern, zumindest zwei Abstützvorrichtungen zum Einsatz kommen.

Zur Schaffung eines flexibel einsetzbaren Arbeitsgerät ist es gemäß einer weiteren Ausführungsvariante möglich, dass am Trägerrahmen, insbesondere in Fahrtrichtung vor den Einscheibenscharen, Säschare und/oder Räumwerkzeuge gelagert sind, wobei diese einen symmetrischen Aufbau aufweisen und/oder wobei diese jeweils zumindest ein, vorzugsweise scheibenartiges, Rotationselement aufweisen, welches in einem spitzen Anstellwinkel gegenüber der Fahrtrichtung nach links oder nach rechts orientiert ist, wobei die Anzahl der nach links orientierten Rotationselemente gegenüber einer Anzahl der nach rechts orientierten Rotationselemente gleich ist oder um maximal 2 oder um maximal 5 unterschiedlich zueinander ist. Die Rotationselemente dienen vorzugsweise zum Lockern der Bodenfläche und/oder zur Beseitigung von Ernterückständen im Bereich der Schneidscheiben.

Insofern den Einscheibenscharen zusätzliche Säschare vorgelagert sind, ist es gemäß einer Weiterbildung der Erfindung möglich, dass die Säschare quer zur Fahrtrichtung jeweils sich mittig zwischen zwei Einscheibenscharen befinden.

Eine alternative oder ergänzende Ausführungsvariante kann vorsehen, dass den Schneidscheiben, insbesondere auf der gegenüberliegenden Seite des jeweiligen spitzen Winkels, ein Saatrohr zugeordnet ist, welches eingerichtet ist, Verteilgut in Richtung zu einer mittels der Schneidscheiben erzeugten Saatfurche zu leiten, wobei das Saatrohr über ein pneumatisches Fördersystem mit einem Vorratsbehälter wirkverbunden ist, welches Fördersystem insbesondere zum Fördern des Verteilgut vom Vorratsbehälters in Richtung des Saatrohr eingerichtet ist und wobei der Vorratsbehälter vorzugsweise am Trägerrahmen und/oder an der Zweipunkt-, Dreipunkt- oder Vierpunktanhängung angebaut ist.

Gemäß einer Alternativen oder ergänzenden Ausführungsvariante der Erfindung kann vorgesehen sein, dass das Anbaugerät an ein Bodenbearbeitungsgerät gekoppelt werden kann und/oder das zwischen dem Anbaugerät und dem Zug- oder Trägerfahrzeug ein Bodenbearbeitungsgerät (z.B. Kreiselegge) zwischengelagert wird.

Gemäß einem weiteren Aspekt der Erfindung wird eine Säscharanordnung bereitgestellt. Die Säscharanordnung ist zur Montage an einem Trägerrahmen eines landwirtschaftlichen Anbaugerät eingerichtet, vorzugsweise zur Montage an einem Trägerrahmen eines landwirtschaftlichen Anbaugerät nach einem der vorgenannten Ausführungsbeispiele eingerichtet, insbesondere zur Montage an einem Trägerrahmen eines landwirtschaftlichen Anbaugerät nach zumindest einem der Ansprüche 1 bis 12 eingerichtet.

Die Säscharanordnung umfasst eine Vielzahl von durch Einscheibenschare gebildete Säschare, die eingerichtet sind, schwenkbar am Trägerrahmen gelagert zu werden, wobei die Einscheibenschare jeweils eine Schneidscheibe, die in einem spitzen Winkel gegenüber der Fahrtrichtung nach links oder nach rechts orientiert ist, aufweisen, wobei die Anzahl der nach links orientierten Schneidscheiben gegenüber einer Anzahl der nach rechts orientierten Schneidscheiben gleich ist oder um maximal 2 oder um maximal 5 unterschiedlich zueinander ist.

Die Einscheibenschare sind in einer Querreihe schwenkbar am Trägerrahmen gelagert, insbesondere derartig schwenkbar am Trägerrahmen gelagert, dass die Aufstandspunkte der Schneidscheiben auf einer gemeinsamen, quer zur Fahrtrichtung orientieren Achse liegen oder dass die Aufstandspunkte der Schneidscheiben auf maximal 2 oder maximal 3, quer zur Fahrtrichtung orientierten Achsen liegen, wobei die Achse der Aufstandspunkte in Fahrtrichtung hinter dem Trägerrahmen liegt und wobei der Abstand in Fahrtrichtung mindestens 0,25 Meter oder mindestens 0,5 Meter beträgt.

Hinsichtlich der Vorteile und Ausführungsformen des erfindungsgemäßen Säscharanordnung wird auf die Vorteile und Ausführungsformen der erfindungsgemäßen landwirtschaftlichen Anbaugerät verwiesen.

Zur Vermeidung von Wiederholungen sei darauf hingewiesen, dass die erfindungsgemäßen Ausführungsformen und Merkmale in beliebiger Weise und Frei mit dem Anbaugerät und/oder der Säscharanordnung kombinierbar sind. Dementsprechend sind alle Ausführungsformen und erfindungsgemäßen Merkmale sowohl für das Anbaugerät als auch für die Säscharanordnung offenbart und beanspruchbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht eines Ausführungsbeispiel eines landwirtschaftlichen Anbaugerät mit Vorratsbehälter,
- Figur 2: eine Seitenansicht des Ausführungsbeispiel des Anbaugerät der Figur 1 ohne Vorratsbehälter,
- Figur 3: eine Draufsicht des Ausführungsbeispiel des Anbaugerät der Figur 2 mit nach links orientierten Schneidscheiben und nach rechts orientierten Schneidscheiben.

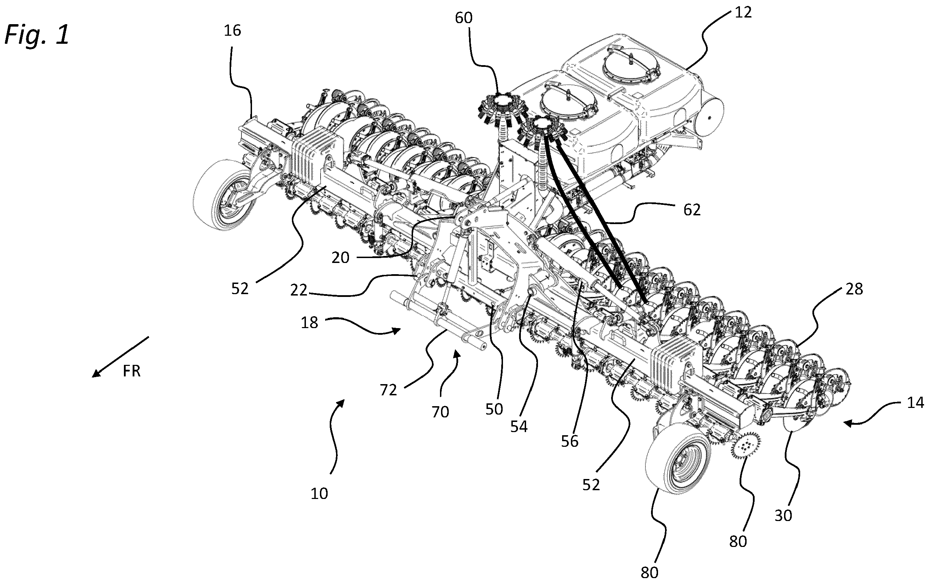

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterungen auch auf die Beschreibung der anderen Ausführungsformen bzw. Figuren verwiesen wird, um Wiederholungen zu vermeiden.

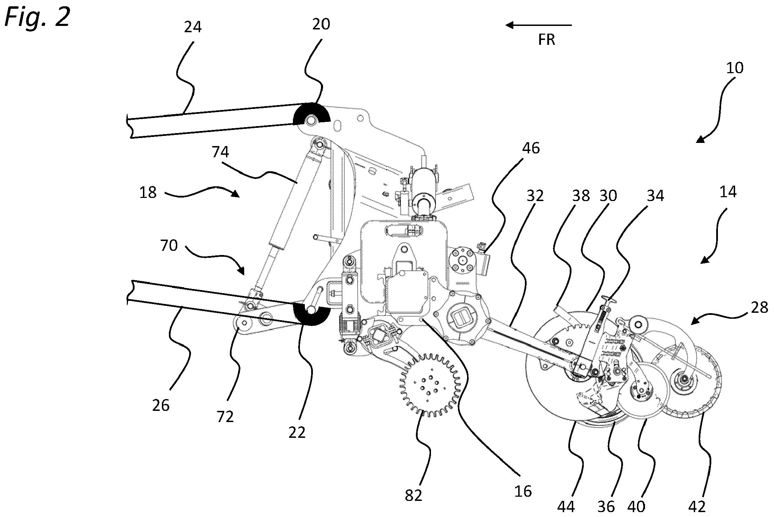

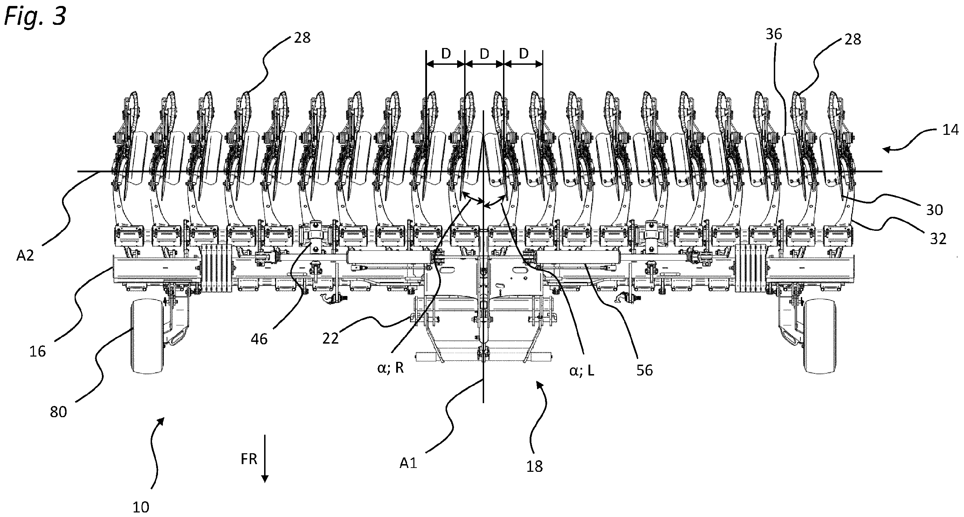

Die Figuren 1 bis 3 zeigen unterschiedliche Ansichten eines Ausführungsbeispiels eines landwirtschaftlichen Anbaugerät 10, die unter gemeinsamer Bezugnahme auf die Figuren 1 bis 3 beschrieben werden. Wobei in der Figur 1 dieses Anbaugerät 10 mit einem Vorratsbehälter 12 ausgeführt ist und wobei in den Figuren 2 und 3 dieser Vorratsbehälter 12 ausgeblendet ist.

Das Anbaugerät 10 ist als landwirtschaftliche Sämaschine ausgeführt und umfasst entsprechend eine Säscharanordnung 14. Das Anbaugerät 10 dient zur Bodenbearbeitung und/oder zur Aussaat von landwirtschaftlichen Verteilgüter, wie bspw. Saatgut, Dünger oder dergl., welche Verteilgüter in granularer und/oder flüssiger Form, insbesondere mittels eines an einem Trägerrahmen 16 angebauten Vorratsbehälter 12, zur Verfügung gestellt werden können.

Das Anbaugerät 10 umfasst einen Trägerrahmen 16 der sich in großer Arbeitsbreite von bspw. 3 Meter, 6 Meter oder mehr quer zur Fahrtrichtung FR erstreckt. Der Trägerrahmen 16 ist insbesondere mehrteilig ausgeführt und umfasst insbesondere mehrere sich quer zur Fahrtrichtung FR erstreckende Rahmenrohre. Wobei die Rahmenrohre bspw. drehbar und/oder höhenverstellbar gelagert sein können.

Zur Koppelung des Anbaugerät 10, d.h. zur Koppelung des Trägerrahmen 16 mit einem Dreipunkt-Kraftheber eines landwirtschaftlichen Zug- oder Trägerfahrzeug ist eine Dreipunktanhängung 18 vorgesehen. Die Dreipunktanhängung 18 umfasst insbesondere eine obere Koppelstelle 20, welche zur Koppelung mit einem, in der Figur 2 schematisch dargestellten, Oberlenker 24 des Dreipunkt-Kraftheber eingerichtet ist. Zudem umfasst die Dreipunktanhängung 18 zwei untere Koppelstellen 22, welche zur Koppelung mit zwei, in der Figur 2 schematisch dargestellten, Unterlenker 26 des Dreipunkt-Kraftheber eingerichtet ist. Es sind aber auch Ausführungsformen mit einer Zweipunktanhängung und/oder Vierpunktanhängung möglich. Die Zweipunktanhängung kann vorzugsweise zumindest zwei (z. B. untere) Koppelstellen umfassen, welche zur Koppelung mit zumindest zwei (z. B. unteren) Lenkern des Zweipunkt-Kraftheber eingerichtet sind. Die Vierpunktanhängung kann vorzugsweise zumindest zwei obere Koppelstellen umfassen, welche zur Koppelung mit einem Oberlenker eingerichtet sind, und zumindest zwei untere Koppelstellen umfassen, welche zur Koppelung mit zwei Unterlenkern des Vierpunkt-Kraftheber eingerichtet sind.

Am Trägerrahmen 16 ist eine Vielzahl von Einscheibenscharen 28 schwenkbar gelagert. Das heißt das insbesondere die Säscharanordnung 14 durch eine Vielzahl von Einscheibenscharen 28 gebildet ist, und eingerichtet ist am Trägerrahmen 16 (z.B. an einem Rahmenrohr) schwenkbar gelagert zu werden. Insbesondere können jeweils eine Mehrzahl (z.B. zwei oder mehr) von Einscheibenscharen an einem Rahmenrohr gelagert werden.

Die Einscheibenschare 28 weißen jeweils eine Schneidscheibe 30 auf, die in einem spitzen Winkel α gegenüber der Fahrtrichtung FR nach links oder nach reichts orientiert ist. Wobei gemäß dem Ausführungsbeispiel die Anzahl der nach links orientierten Schneidscheiben 30 gegenüber der Anzahl der nach rechts orientierten Schneidscheiben 30 gleich ist. Wobei die Anzahl alternativ auch um maximal 2 oder um maximal 5 unterschiedlich sein könnte. Zur Verdeutlichung der Orientierung wurde gemäß der Figur 3 die Angabe des spitzen Winkel α um ein L für links und ein R für rechts ergänzt.

Das Ausführungsbeispiel zeigt eine bevorzugte Ausführungsvariante des Anbaugerät 10, bei welchem der Trägerrahmen 16 durch ein Mittelteil 50 und zumindest zwei seitliche Ausleger 52 gebildet ist. Zudem ist die Dreipunktanhängung 18 dem Mittelteil 50 zugeordnet. Zur Einhaltung einer gesetzlich geforderten Transportbreite kann vorgesehen sein, dass die Ausleger 52 um in Fahrtrichtung FR orientierte Schwenkachsen 54, schwenkbar gegenüber dem Mittelteil 50 gelagert sind. Zum Verschwenken der Ausleger 52 können bspw. Linearantriebe 56, insbesondere in Form von Hydraulikzylindern vorgesehen sein. Wie insbesondere aus der Figur 3 hervorgeht, ist es möglich, dass einem der Ausleger 52 ausschließlich Einscheibenschare 28 mit nach links orientierten Schneidscheiben 30 zugeordnet sind und einem der Ausleger 52 ausschließlich Einscheibenschare 28 mit nach rechts orientierten Schneidscheiben 30 zugeordnet sind. Zudem ist es möglich, dass den jeweiligen gegenüberliegenden Hälften des Trägerrahmen 16 Einscheibenschare 28 mit entgegengesetzt orientierten Schneidscheiben 30 zugeordnet sind.

Die Anordnung der Einscheibenschare 28 ist gemäß dem Ausführungsbeispiel im Wesentlichen symmetrisch, d.h. dass am Trägerrahmen 16 die Einscheibenschare 28 mit einer nach links orientierten Schneidscheibe 30 und die Einscheibenschare 28 mit einer nach rechts orientierten Schneidscheibe 30 im Wesentlichen symmetrisch zu einer in Fahrtrichtung FR verlaufenden Mittelachse A1 des Anbaugerät 10 gelagert sind. Insbesondere kann der symmetrische Aufbau dadurch erreicht werden, indem die Anzahl der nach links orientierten Schneidscheiben gegenüber einer Anzahl der nach rechts orientierten Schneidscheiben 30 gleich ist.

Wie aus der Seitenansicht der Figur 2 zudem hervorgeht, ist vorgesehen, dass die Einscheibenschare 28 derartig schwenkbar am Trägerrahmen 16 gelagert sind, dass die Einscheibenschare 28 unabhängig von deren Orientierung eine im wesentlichen gleiche Höhenlage aufweisen, d.h. dass die Aufstandspunkte 44 der Schneidscheiben 30 eine im wesentlichen gleiche Arbeitstiefe zueinander aufweisen. Wobei zur Verstellung der Höhenlage wiederum ein Stellantrieb 46, z.B. in Form eines Hydraulikzylinder vorgesehen sein kann, welcher Hydraulikzylinder zweckmäßig zur Rotation und/oder Höhenverstellung des Rahmenrohr eingerichtet sein kann.

Mittels des Stellantrieb 46 kann insbesondere ein Rahmenrohr des Trägerrahmen 16 verschwenkt werden, wobei wiederum am Rahmenrohr des Trägerrahmen 16 mehrere Einscheibenschare 28 schwenkbar gelagert sind. In Abhängigkeit der Rotationslage des Rahmenrohr kann zweckmäßig bspw. auch die Kraft, mit welcher die Einscheibenschare 28 entlang der Bodenfläche bewegt werden verändert werden und/oder die Höhenlage (z.B. Arbeitstiefe) verändert werden.

Der spitze Winkel α wird zum einen durch die Schneidscheibe 30 gebildet, d.h. die Schneidscheibe 30 bildet bspw. den ersten Schenkel des spitzen Winkel α, zum anderen bildet eine, den ersten Schenkel schneidende und parallel zur Fahrtrichtung FR verlaufende Achse A1 (z.B. Mittelachse A1) den zweiten Schenkel, so dass sich zwischen dem ersten Schenkel und dem zweiten Schenkel der spitze Winkel α ergibt. Wobei der spitze Winkel α nach rechts oder nach links orientiert sein kann.

Gemäß dem Ausführungsbeispiel ist der spitze Winkel α sich in Fahrtrichtung FR öffnend ausgeführt. Insbesondere ist es möglich, dass alle spitzen Winkel α sich öffnend ausgeführt sind. Wie insbesondere aus der Figur 3 hervorgeht, sind die spitzen Winkel α der nach links orientierten Schneidscheiben 30 gleich zu den spitzen Winkel α der nach rechts orientierten Schneidscheiben 30. Wobei die spitzen Winkel α unabhängig von deren Orientierung gleich groß sind. Alternativ jedoch auch unterschiedlich orientiert oder groß sein könnten. Insbesondere ist es möglich, dass die Summe der spitzen Winkel α die nach links orientiert sind identisch ist zur Summe der spitzen Winkel α die nach rechts orientiert sind.

Die Einscheibenschare 28 umfassen jeweils einen Scharrahmen 32, mittels welchem das Einscheibenschar 28 am Trägerrahmen 16, insbesondere an einem Rahmenrohr des Trägerrahmen 16 schwenkbar gelagert wird. Zur Lagerung der Einscheibenschare 30 kann bspw. eine an sich bekannte Elastomerlagerung verwendet werden. Am Scharrahmen 32 ist jeweils eine Schneidscheibe 30 drehbar gelagert. Zur exakten Tiefenführung des Einscheibenschar 28 ist neben der Schneidscheibe 30 eine, mittels eines Verstellmechanismus 34 verstellbare Tiefenführungsrolle 36 vorgesehen. Die Schneidscheibe 30 dient jeweils zur Erzeugung einer Saatfurche in einer Bodenfläche, wobei zudem ein Saatrohr 38 vorgesehen ist, mittels welchem das Verteilgut in die Saatfurche geleitet wird. Zur verbesserten Ausprägung der Saatfurche ist neben der Schneidscheibe, bzw. im Bereich des Saatrohr 38 zudem eine Scharkufe vorgesehen. Nachfolgend an das Saatrohr 38 folgen eine Fangrolle 40 sowie eine Druckrolle 42. Wobei mittels der Druckrolle 42 die Saatfurche geschlossen werden kann. Die Druckrolle 42 ist zudem in einem entgegengesetzt zum spitzen Winkel α orientieren Winkel gegenüber der Fahrtrichtung FR angeordnet.

Das Saatrohr 38 ist auf der gegenüberliegenden Seite des spitzen Winkel α der Schneidscheibe 30 zugeordnet. Wobei dem Saatrohr 38 mittels eines pneumatischen Fördersystem, welches mit dem Vorratsbehälter 12 bspw. mittels eines Verteilerturmes 60 und entsprechenden mit Luft beaufschlagten Leitungen 62 gekoppelt ist, entsprechend Verteilgut zugeführt werden kann.

Der Scharrahmen 32 ist derartig ausgeführt, dass die Einscheibenschare 28 als Schwinge schwenkbar am Trägerrahmen 16 gelagert sind. Alternativ oder ergänzend könnte der Scharrahmen 32 jedoch auch ein Parallelogramm bilden, respektive ein Parallelogramm mit umfassen.

Die Einscheibenschare 28 sind in einer Querreihe am Trägerrahmen 16 angeordnet und ausgebildet, dass die Aufstandspunkte 44 aller Schneidscheiben 30 auf einer gemeinsamen, quer zur Fahrtrichtung FR orientieren und die jeweiligen Aufstandspunkte 44 schneidenden Achse A2 liegen.

Alternativ kann auch vorgesehen sein, dass die Einscheibenschare 28 Scharrahmen 32 mit unterschiedlichen Längen in Fahrtrichtung FR aufweisen, so dass sich entsprechend unterschiedliche Abstände der Aufstandspunkte 44 der Schneidscheiben 30 in Fahrtrichtung FR zum Trägerrahmen 16 ergeben, wobei somit die Aufstandspunkte 44 der Schneidscheiben 30 auf maximal 2 oder maximal 3, quer zur Fahrtrichtung FR orientierten und die jeweiligen Aufstandspunkte 44 schneidenden Achsen A2 liegen können.

Die Einscheibenschare 28 sind derartig am Trägerrahmen 16 schwenkbar gelagert, dass die nebeneinander liegenden Aufstandspunkte 44 aller Schneidscheiben 30, d.h. unabhängig davon, ob diese nach links oder nach rechts orientiert sind, quer zur Fahrtrichtung FR jeweils einen im wesentlichen gleichen Abstand D zueinander aufweisen.

Es ist zweckmäßig insbesondere möglich, dass die Einscheibenschare 28 quer zur Fahrtrichtung FR eine maximale Erstreckung aufweisen, die kleiner ist als ein Abstand D von zwei Aufstandspunkten 44 von Schneidscheiben 30.

Zur Gewichtsübertragung vom Zug- oder Trägerfahrzeug auf das Arbeitsgerät 10 ist eine Kraftübertragungseinrichtung 70 vorgesehen. Die Kraftübertragungseinrichtung 70 umfasst eine Koppelstange 72 und eine Stelleinrichtung 74. Die Koppelstange 72 ist zweckmäßig eingerichtet, eine Verbindung mit einem rückwärtigen (z.B. unteren) Endbereich zumindest eines Unterlenkers 26 des Dreipunkt-Kraftheber herzustellen. Zudem ist die Stelleinrichtung 74 eingerichtet, eine Kraft auf die Koppelstange 72 zu übertragen. Die Stelleinrichtung 74 kann bspw. durch einen, insbesondere eine veränderbare Kraft erzeugenden Zylinder (z.B. Hydraulikzylinder) gebildet sein. Die Stelleinrichtung 74 ist mit dem Trägerrahmen 16, insbesondere mit dem Mittelteil 50 des Trägerrahmen 16, zum einen und zum anderen mit der Koppelstange 72 verbunden.

Dem Trägerrahmen 16 sind an linken und rechten Randbereichen sowie den Einscheibenscharen 28 vorgelagert, Abstützeinrichtungen 80 zugeordnet, wobei die Abstützeinrichtungen 80 höhenverstellbar (z.B. mittels Lochkulisse und Steckbolzen und/oder mittels Hydraulikzylinder oder dergl.) gegenüber dem Trägerrahmen 16 am Trägerrahmen 16 gelagert sind. Die Abstützeinrichtungen 80 sind durch Stützräder gebildet und zweckmäßig als Frontstützräder ausgeführt. Die Anzahl der Abstützeinrichtungen kann in Abhängigkeit der Arbeitsbreite, d.h. der Längserstreckung des Trägerrahmen 16 variieren. Insbesondere kann die Anzahl der Abstützeinrichtungen 80 derartig gewählt sein, dass ein Abstand zwischen der Dreipunktanhängung 18 und der jeweiligen Abstützeinrichtung 80 quer zur Fahrtrichtung FR maximal 3 Meter beträgt.

Am Trägerrahmen 16 sind zudem, und insbesondere in Fahrtrichtung vor den Einscheibenscharen 28, Räumwerkzeuge 82 gelagert. Anstelle von Räumwerkzeugen 82 können alternativ oder ergänzend auch Säschare vorgesehen sein. Wobei die Räumwerkzeuge 82 insbesondere zumindest ein scheibenartiges Rotationselement aufweisen, welches in einem spitzen Anstellwinkel gegenüber der Fahrtrichtung FR nach links oder nach rechts orientiert ist, wobei die Anzahl der nach links orientierten Rotationselemente 82 gegenüber einer Anzahl der nach rechts orientierten Rotationselemente 82 gleich ist oder um maximal 2 oder um maximal 5 unterschiedlich zueinander ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

| | | | |
|---|---|---|---|
| 10 | Anbaugerät | 52 | Ausleger |
| 12 | Vorratsbehälter | 54 | Schwenkachse |
| 14 | Säscharanordnung | 56 | Linearantrieb |
| 16 | Trägerrahmen | 60 | Verteilerturm |
| 18 | Dreipunktanhängung | 62 | Leitungen |
| 20 | Oberer Koppelpunkt | 70 | Kraftübertragungseinrichtung |
| 22 | Unterer Koppelpunkt | 72 | Koppelstange |
| 24 | Oberlenker | 74 | Stelleinrichtung |
| 26 | Unterlenker | 80 | Abstützeinrichtung |
| 28 | Einscheibenschar | 82 | Räumwerkzeug |
| 32 | Scharrahmen | | |
| 34 | Verstellmechanismus | FR | Fahrtrichtung |
| 36 | Tiefenführungsrolle | α | Spitzer Winkel |
| 38 | Saatrohr | A1 | Achse; Mittelachse |
| 40 | Fangrolle | A2 | Achse |
| 42 | Druckrolle | L | Links |
| 44 | Aufstandspunkt | R | Rechts |
| 46 | Stellantrieb | D | Abstand |
| 50 | Mittelteil | | |

## Patentansprüche

1. Landwirtschaftliches Anbaugerät (10), insbesondere landwirtschaftliche Sämaschine, mit einem sich quer zur Fahrtrichtung (FR) erstreckenden Trägerrahmen (16) mit einer Zweipunkt-, Dreipunkt- oder Vierpunktanhängung (18), die zur Koppelung des Trägerrahmen (16) mit einem Zweipunkt-, Dreipunkt- oder Vierpunkt-Kraftheber eines landwirtschaftlichen Zug- oder Trägerfahrzeug eingerichtet ist, **dadurch gekennzeichnet, dass** am Trägerrahmen (16) eine Vielzahl von Einscheibenscharen (28) schwenkbar gelagert sind, wobei die Einscheibenschare (28) jeweils eine Schneidscheibe (30), die in einem spitzen Winkel (α) gegenüber der Fahrtrichtung (FR) nach links oder nach rechts orientiert ist, aufweisen, wobei die Anzahl der nach links orientierten Schneidscheiben (30) gegenüber einer Anzahl der nach rechts orientierten Schneidscheiben (30) gleich ist oder um maximal 2 oder um maximal 5 unterschiedlich zueinander ist.

2. Anbaugerät (10) nach Anspruch 1, **dadurch gekennzeichnet, dass** der spitze Winkel (α) der links orientierten Schneidscheiben (30) und der rechts orientierten Schneidscheiben (30) in Fahrtrichtung (FR) sich öffnend ausgeführt ist oder in Fahrtrichtung (FR) sich schließend ausgeführt ist.

3. Anbaugerät (10) nach einem der vorhergehenden Ansprüche, **dadurch gekennzeichnet, dass**
- die Einscheibenschare (28) in einer Querreihe schwenkbar am Trägerrahmen (16) gelagert sind, und/oder
- die Einscheibenschare (28) derartig schwenkbar am Trägerrahmen (16) gelagert sind, dass die Aufstandspunkte (44) der Schneidscheiben (30) auf einer gemeinsamen, quer zur Fahrtrichtung (FR) orientieren Achse (A2) liegen oder dass die Aufstandspunkte (44) der Schneidscheiben (30) auf maximal 2 oder maximal 3, quer zur Fahrtrichtung (FR) orientierten Achsen (A2) liegen und/oder
- die Achse (A2) der Aufstandspunkte (44) in Fahrtrichtung (FR) hinter dem Trägerrahmen (16) liegt, wobei der Abstand in Fahrtrichtung (FR) mindestens 0,25 Meter oder mindestens 0,5 Meter beträgt.

4. Anbaugerät (10) nach einem der vorhergehenden Ansprüche, **dadurch gekennzeichnet, dass** die quer zur Fahrtrichtung (FR) nebeneinander liegenden Aufstandspunkte (44) von links orientierten Schneidscheiben (30) und von rechts orientierten Schneidscheiben (30) jeweils einen im wesentlichen gleichen Abstand (D) zueinander aufweisen, wobei der Abstand (D) maximal 0,4 Meter oder maximal 0,25 Meter oder maximal 0,2 Meter beträgt.

5. Anbaugerät (10) nach einem der vorhergehenden Ansprüche, **dadurch gekennzeichnet,**
- **dass** an einer Hälfte, insbesondere einem Ausleger (52), des Trägerrahmens (16) ausschließlich Einscheibenschare (28) mit nach links orientierten Schneidscheiben (30) oder mit nach rechts orientierten Schneidscheiben (30) schwenkbar gelagert sind und/oder
- **dass** am Trägerrahmen (16) Einscheibenschare (28) mit einer nach links orientierten Schneidscheibe (30) und Einscheibenschare (28) mit einer nach rechts orientierten Schneidscheibe (30) im Wesentlichen symmetrisch zu einer in Fahrtrichtung (FR) verlaufenden Mittelachse (A1) des Anbaugerät (10) schwenkbar gelagert sind und/oder
- **dass** am Trägerrahmen (16) wechselweise Einscheibenschare (28) mit einer nach links orientierten Schneidscheibe (30) und Einscheibenschare (28) mit einer nach rechts orientierten Schneidscheibe (30) schwenkbar gelagert sind und/oder
- **dass** am Trägerrahmen (16) jeweils Gruppen von wenigstens zwei Einscheibenscharen (28) mit einer nach links orientierten Schneidscheibe (30) abwechselnd mit einer Gruppe von wenigstens zwei Einscheibenscharen (28) mit einer nach rechts orientierten Schneidscheibe (30) schwenkbar gelagert sind, wobei die sich abwechselnden Gruppen vorzugsweise jeweils gleich groß sind.

6. Anbaugerät (10) nach einem der vorhergehenden Ansprüche, **dadurch gekennzeichnet, dass** die Einscheibenschare (28) derartig schwenkbar am Trägerrahmen (16) gelagert sind, dass die Aufstandspunkte (44) der Schneidscheiben (30) unabhängig von deren Orientierung eine im Wesentlichen gleiche Höhenlage zueinander aufweisen.

7. Anbaugerät (10) nach einem der vorhergehenden Ansprüche, **dadurch gekennzeichnet, dass** der Trägerrahmen (16) durch ein Mittelteil (50) und zumindest zwei seitliche Ausleger (52) gebildet ist, wobei die seitlichen Ausleger (52) um in Fahrtrichtung (FR) orientierte Schwenkachsen (54), schenkbar gegenüber dem Mittelteil (50) gelagert sind und wobei die Zweipunkt-, Dreipunkt- oder Vierpunktanhängung (18) insbesondere dem Mittelteil (50) zugeordnet ist.

8. Anbaugerät (10) nach Anspruch 7, **dadurch gekennzeichnet, dass** der Trägerrahmen (16) durch ein Mittelteil (50) und zwei seitliche Ausleger (52) gebildet ist, wobei an einem der Ausleger (52) ausschließlich Einscheibenschare (28) mit nach links orientierten Schneidscheiben (30) schwenkbar gelagert sind und wobei an einem der Ausleger (52) ausschließlich Einscheibenschare (28) mit nach rechts orientierten Schneidscheiben (30) schwenkbar gelagert sind.

9. Anbaugerät (10) nach einem der vorhergehenden Ansprüche, **dadurch gekennzeichnet, dass** der Zweipunkt-, Dreipunkt- oder Vierpunktanhängung (18) eine Kraftübertragungseinrichtung (70), umfassend eine Koppelstange (72) und eine Stelleinrichtung (74), zugeordnet ist, wobei die Koppelstange (72) eingerichtet ist, eine Verbindung mit einem rückwärtigen Endbereich, zumindest eines Lenkers, insbesondere Unterlenkers (26) des Zweipunkt-, Dreipunkt- oder Vierpunkt-Kraftheber herzustellen und wobei die Stelleinrichtung (74) eingerichtet ist, eine Kraft auf die Koppelstange (72) zu übertragen.

10. Anbaugerät (10) nach einem der vorhergehenden Ansprüche, **dadurch gekennzeichnet, dass** am Trägerrahmen (16), insbesondere zumindest an linken und rechten Randbereichen des Trägerrahmen (16) und insbesondere den Einscheibenscharen (28) in Fahrtrichtung (FR) vorgelagert, Abstützeinrichtungen (80) vorgesehen sind, wobei die Abstützeinrichtungen (80) und/oder die Einscheibenschare (28) höhenverstellbar gegenüber dem Trägerrahmen (16) am Trägerrahmen (16) gelagert sind.

11. Anbaugerät (10) nach einem der vorhergehenden Ansprüche, **dadurch gekennzeichnet, dass** am Trägerrahmen (16), insbesondere in Fahrtrichtung (FR) vor den Einscheibenscharen (28), Säschare und/oder Räumwerkzeuge (82) gelagert sind, wobei diese
- einen symmetrischen Aufbau aufweisen und/oder
- wobei diese jeweils zumindest ein, vorzugsweise scheibenartiges, Rotationselement aufweisen, welches in einem spitzen Anstellwinkel gegenüber der Fahrtrichtung (FR) nach links oder nach rechts orientiert ist, wobei die Anzahl der nach links orientierten Rotationselemente gegenüber einer Anzahl der nach rechts orientierten Rotationselemente gleich ist oder um maximal 2 oder um maximal 5 unterschiedlich zueinander ist.

12. Anbaugerät (10) nach einem der vorhergehenden Ansprüche, **dadurch gekennzeichnet, dass** den Schneidscheiben (30), insbesondere auf der gegenüberliegenden Seite des jeweiligen spitzen Winkel (α), ein Saatrohr (38) zugeordnet ist, welches eingerichtet ist, Verteilgut in Richtung zu einer mittels der Schneidscheiben (30) erzeugten Saatfurche zu leiten, wobei das Saatrohr (38) über ein pneumatisches Fördersystem mit einem Vorratsbehälter (12) wirkverbunden ist, welches Fördersystem insbesondere zum Fördern des Verteilgut vom Vorratsbehälter (12) in Richtung des Saatrohr (38) eingerichtet ist und wobei der Vorratsbehälter (12) vorzugsweise am Trägerrahmen (16) und/oder an der Zweipunkt-, Dreipunkt- oder Vierpunktanhängung (18) angebaut ist.

13. Säscharanordnung (14) welche zur Montage an einem Trägerrahmen (16) eines landwirtschaftlichen Anbaugerät (10) eingerichtet ist, insbesondere zur Montage an einem Trägerrahmen (16) eines landwirtschaftlichen Anbaugerät (10) nach zumindest einem der Ansprüche 1 bis 12 eingerichtet ist, umfassend eine Vielzahl von durch Einscheibenschare (28) gebildeten Säschare, die eingerichtet sind, schwenkbar am Trägerrahmen (16) gelagert zu werden, wobei die Einscheibenschare (28) jeweils eine Schneidscheibe (30), die in einem spitzen Winkel (α) gegenüber der Fahrtrichtung (FR) nach links oder nach rechts orientiert ist, aufweisen, wobei die Anzahl der nach links orientierten Schneidscheiben (30) gegenüber einer Anzahl der nach rechts orientierten Schneidscheiben (30) gleich ist oder um maximal 2 oder um maximal 5 unterschiedlich zueinander ist, wobei die Einscheibenschare (28) in einer Querreihe schwenkbar am Trägerrahmen (16) gelagert sind, insbesondere derartig schwenkbar am Trägerrahmen (16) gelagert sind, dass die Aufstandspunkte (44) der Schneidscheiben (30) auf einer gemeinsamen, quer zur Fahrtrichtung (FR) orientieren Achse (A2) liegen oder dass die Aufstandspunkte (44) der Schneidscheiben (30) auf maximal 2 oder maximal 3, quer zur Fahrtrichtung (FR) orientierten Achsen (A2) liegen, wobei die Achse (A2) der Aufstandspunkte (44) in Fahrtrichtung (FR) hinter dem Trägerrahmen (16) liegt und wobei der Abstand in Fahrtrichtung (FR) mindestens 0,25 Meter oder mindestens 0,5 Meter beträgt.
